# EUROPEAN PATENT SPECIFICATION

(11) **EP 2 779 615 B1**
(45) Date of publication and mention of the grant of the patent: **19.04.2017**
(21) Application number: 14158340.1
(22) Date of filing: 07.03.2014
(51) Int. Cl.: H04N 1/028, H04N 1/00

(54) **Image readout method and image readout apparatus**
Bildausleseverfahren und Auslesevorrichtung
Procédé de lecture d'image et appareil de lecture d'image

(30) Priority: 12.03.2013 JP 2013049129
(43) Date of publication of application: 17.09.2014
(73) Proprietor: Fujifilm Corporation, Minato-ku Tokyo (JP)
(72) Inventor: Takamatsu, Masaki, Kanagawa, 258-8538 (JP)
(74) Representative: Klunker . Schmitt-Nilson . Hirsch

(56) References cited:
- EP-A1- 2 468 521
- EP-A2- 2 093 070
- WO-A1-2009/155198
- US-A- 4 707 710
- US-A1- 2007 024 923
- US-A1- 2009 190 191

## Description

### Technical Field

The present invention relates to an image readout method and an image readout apparatus that obtains image data of images represented by image information by reading out light received from a carrier carrying the image information photoelectrically.

### Background Art

Storage phosphor stores a part of radiation energy received by irradiation with radiation, and emits photostimulated light corresponding to the stored radiation energy when irradiated with excitation light such as visible light and a laser beam. Radiographic image readout apparatuses using this storage phosphor (photostimulable phosphor) that laminate the storage phosphor on support bodies, temporarily store radiographic images of subjects, such as human bodies, in photostimulable phosphor sheets by emitting radiation toward the subjects, output excitation light, such as a laser beam, to the storage phosphor sheets to generate photostimulated light, and photoelectrically read out the photostimulated light to obtain image signals are in wide practical use in CR (Computed Radiography).

There exists prior art (US 4 707 710 A) in which in a scanning apparatus scanning a form slide film a drift amount correcting apparatus is used. Scanning is carried out by deflecting a light beam by means of a polygon mirror horizontally and by deflecting the thus horizontally deflected light beam vertically by means of a galvanometer mirror. In order to set a centre point of the image to be scanned always at a predetermined position, there is provided a scan mark the ends of which being determined by predetermined vertical addresses. During each horizontal scan a pulse is generated by the scan mark. If there is a drift in the structure, the scanned end of the scan mark does not coincide with the associated address. Then, the vertical scanning pitch drive of the galvanometer is corrected so as to let coincide the axis of the vertical scanning line with the centre position of the image to be scanned.

WO 2009/155198 A1 discloses a photon detector in which a scintillator photodiode array is used for counting photons (ideally, each photon is counted individually). An average count value output by each of a plurality of pixels during a certain period of time is determined and an actual average count value is multiplied by a correction factor.

Similarly, examples of systems using storage phosphor sheets are known as autoradiographic image detection systems (for example, Patent Document 1), image detection systems for electron microscopes, and radiation diffraction image detection systems (for example, Patent Document 2).

The systems using these storage phosphor sheets as materials for the detection of images differ from cases that photographic film is employed in that these systems not only require no chemical treatment, such as developing treatment, but also favorably reproduce images as desired by administering image processing on the obtained image data or enable quantitative analysis using computers.

As a substitute for a radioactive-labeled substance in the autoradiographic system, fluorescence image detection (fluorescence) systems, in which a fluorescence substance is used as a labeled substance, are also known.

Further, chemiluminescence image detection systems that employ a substance, which emits chemiluminescence upon contact with a chemiluminescent substance, as labeled substances, and that detect the chemiluminescence emitted by contact between the labeled substances and the chemiluminescent substance. There are two types of chemiluminescence image detection systems: a type (for example, Patent Document 3) in which the chemiluminescence light is stored and recorded in the aforementioned storage phosphor sheet, and then images are detected from the storage phosphor sheet; and a type in which the chemiluminescence light is directly detected by light detection means.

These autoradiographic image detection systems, chemiluminescence image detection systems, image detection systems by electron microscopes, radiation diffraction image detection systems, and fluorescence image detection systems are used for similar purposes, and accordingly image readout apparatuses which can be commonly used for these systems have already been proposed.

US 2007/024923 discloses an image readout apparatus in which a light acquisition section includes a CCD sensor which reads light reflected from a scanned document. A size sensor detects a length of a scanned document in an auxiliary scanning direction, a further sensor detects the length of the document in the main scanning direction. A control unit controls irradiation of light with which the document is irradiated based on changes in the setting position of the document.

EP 2 468 521 A1 discloses a printer having a drive mechanism for conveying a Y-bar in an X axis direction over a flat bed along linear scales. A detector head is moved in the Y axis direction. Optical encoders detect said linear scales. The elements of the printer are controlled and corrected based on output signals of the encoders.
A similar printer is known from EP 2 093 070 A2.

### [Prior Art Documents]

### [Patent Documents]

Patent Document 1: Japanese Patent Publication No. 1(1989)-060784
Patent Document 2: Japanese Unexamined Patent Publication No. 61(1986)-051738
Patent Document 3: U.S. Patent No. 5,028,793

### SUMMARY OF THE INVENTION

The aforementioned image readout apparatuses scan optical heads in a main scanning direction and a sub-scanning direction which is perpendicular to the main scanning direction and photoelectrically reads out light received from carriers carrying image information so as to obtain image data of images represented by the image information. Such an image readout apparatus generally includes: a holding substrate which movably holds an optical head in the main scanning direction; and a movement mechanism which moves this holding substrate to perform scanning in the sub-scanning direction.

In general, although this optical head is moved in the main scanning direction through a position management with a linear encoder, a linear scale film used for the linear encoder expands and contracts under the influence of temperature and humidity. This can cause the accuracy of position detection by the linear encoder to fluctuate.

In the image readout apparatus, the image data is structured such that positions of the optical head in the main scanning direction and sub-scanning direction are associated with pixel positions of an image. If the linear scale film expands and contracts as described above, a problem, that the image shape will be distorted, will occur.

In terms of specific numerical values, a linear scale film of approximately 50cm under the circumstances of ordinary use expands and contracts by a maximum of approximately 200µm. At this time, the maximum error is approximately 0.04%, which is not preferable but is an acceptable value in the case that a single image is viewed. However, this has a significant influence on the accuracy of analysis in the case that positions and sizes of objects to be measured are minutely compared among a plurality of images, for example, in the case that the amounts of electrophoresis are measured among a plurality of images when analyzing protein or DNA.

The present invention has been made in view of the foregoing circumstances, it is an object of the present invention to provide an image readout method and image readout apparatus that eliminates the influence of expansion and contraction of a linear scale film and that enables obtainment of images without distortion by the image read out apparatus that manages the position of an optical head with a linear encoder.

The image readout method of the present invention has the features of claim 1.

In the image readout method of the present invention, the pixel positions may be corrected in such a manner that any one of a related plurality of images to be read out is designated as a reference image. The comparative pulse number obtained during readout of the reference image is designated as the reference pulse number for images other than the reference image among the plurality of images.

When reading out a single image, comparative pulse numbers may be obtained at a plurality of points in the second scanning direction, and a region (a region between each comparative pulse number obtaining line and the next comparative pulse number obtaining line) which corresponds to each of a plurality of comparative pulse numbers may be subjected to the correction of the pixel positions based on the difference between the reference pulse number and each comparative pulse number.

The image readout apparatus of the present invention has the features of claim 4.

According to the image readout method and image readout apparatus of the present invention, the number of encoder pulses of a linear encoder is obtained as a comparative pulse number when the light acquisition section is moved from the scanning start position to the scanning end position during image readout. Further, the pixel positions in a direction corresponding to the first scanning direction of an image are corrected based on the difference between a reference pulse number which is determined in advance and the comparative pulse number. This can eliminate the influence of expansion and contraction of a linear scale film to enable obtainment of images without distortion.

### BRIEF DESCRIPTION OF THE DRAWINGS

Figure 1 is a schematic configuration diagram of an image detection system that includes an image readout apparatus according to an embodiment of the present invention.
Figure 2 is a schematic configuration diagram of a main part of the image readout apparatus as described above.
Figure 3 is a top plan view showing the schematic configuration of an optical head holding substrate of the image readout apparatus as described above.
Figure 4 is a side view showing the schematic configuration of the optical head holding substrate of the image readout apparatus as described above.
Figure 5 is a chart showing the relationship between positions in a main scanning direction of the optical head and numbers of linear encoder pulses.

### DESCRIPTION OF THE PREFERRED EMBODIMENTS

Hereinafter, an embodiment of the present invention will be described in detail with reference to the accompanying drawings.

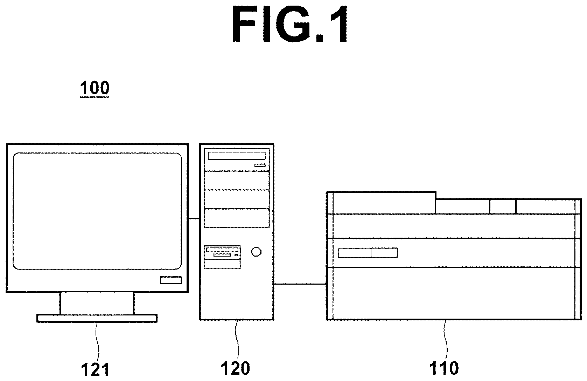

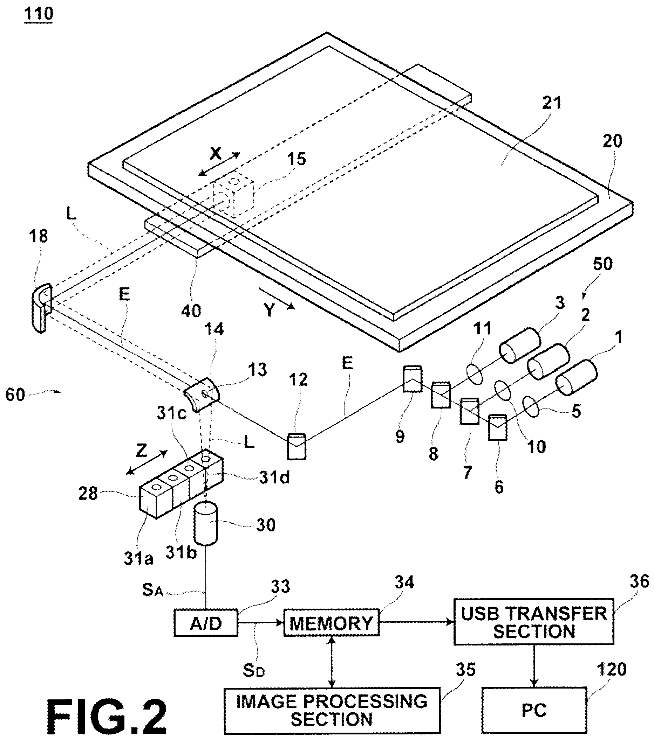

Figure 1 schematically illustrates the configuration of an image detection system including an image readout apparatus according to an embodiment of the present invention. Figure 2 schematically illustrates the configuration of a main part of the image readout apparatus as described above.

This image detection system 100 is composed of an image readout apparatus 110, a computer 120 connected to the image readout apparatus 110 by a USB connection, and a monitor 121 connected to the computer 120.

The image readout apparatus 110 of the present embodiment can be used in common for an autoradiographic image detection system, a chemiluminescence image detection system, an image detection system for an electron microscope, a radiation diffraction image detection system, a fluorescence image detection system and the like. As illustrated in Figure 2, the image readout apparatus 110 includes a stage 20 provided with an image carrier 21, an optical head (light acquisition section) 15 for outputting excitation light E onto the image carrier 21 and converging emitted light L emitted from the image carrier 21, and a plurality of light sources. The image readout apparatus 110 further includes a light source optical system 50 which selectively generates the excitation light E, a photomultiplier 30 which is a light detection means that detects the emitted light L, optical means 60 for guiding light from the light source optical system 50 to the optical head 15 and guiding the emitted light L to the photomultiplier 30, an A/D converter 33 which performs A/D conversion on a signal output from the photomultiplier 30, a memory 34 which stores image data output from the A/D converter 33, an image processing section (correction means) 35 which performs image processing, such as a correction of pixel positions, on the image data stored in the memory 34 as appropriate, and an USB transfer section 36 which transfers the image data stored in the memory 34 through the USB (Universal Serial Bus) to the computer 120.

The light source optical system 50 includes a first laser excitation light source 1 which emits a laser beam E having a wavelength of 640nm, a second laser excitation light source 2 which emits a laser beam E having a wavelength of 532nm, and a third laser excitation light source 3 which emits a laser beam E having a wavelength of 473nm. In the present embodiment, the first laser excitation light source 1 is composed of a semiconductor laser, and both the second laser excitation light source 2 and the third laser excitation light source 3 are composed of a semiconductor laser and a second harmonic generation element. Further, the light source optical system 50 includes collimator lenses 5, 10 and 11 for collimating the laser beams E emitted from the plurality of excitation light sources 1, 2 and 3; mirrors 6 and 9 for guiding the laser beams E to the optical means 60; and dichroic mirrors 7 and 8.

The laser beam E emitted from the first laser excitation light source 1 is collimated by the collimator lens 5 and then is reflected by the mirror 6. A first dichroic mirror 7 which transmits the 640nm laser beam E and reflects light having a wavelength of 532nm and a second dichroic mirror 8 which transmits light having wavelengths of 532nm or greater and reflects light having a wavelength of 473nm are arranged in an optical path of the laser beam E emitted from the first laser excitation light source 1. The laser beam E, which is emitted from the first laser excitation light source 1 and is reflected by the mirror 6, is transmitted through the first dichroic mirror 7 and the second dichroic mirror 8 and enters the mirror 9.

The laser beam E generated from the second laser excitation light source 2 is collimated by the collimator lens 10 and then is reflected by the first dichroic mirror 7, whereby the propagating direction thereof is changed by 90 degrees such that the laser beam E is transmitted through the second dichroic mirror 8 and enters the mirror 9.

The laser beam E generated from the second laser excitation light source 3 is collimated by the collimator lens 11 and then is reflected by the second dichroic mirror 8, whereby the propagating direction thereof is changed by 90 degrees such that the laser beam E enters the mirror 9.

The laser beam E which enters the mirror 9 is reflected by the mirror 9 and enters the mirror 12 of the optical means 60 to be described later.

The optical head 15 includes a concave surface mirror and an aspherical surface lens which are not shown. The laser beam E which advanced parallel to a surface of the image carrier and entered the optical head 15 is reflected by the concave surface mirror toward the image carrier 21 and is converged by the aspherical surface lens 17 on the image carrier 21 set on the stage 20. The emitted light L output from the image carrier 21 by the emission with the laser beam E is converged by the aspherical surface lens and enter the concave surface mirror to be further converged by the concave surface mirror as well as is reflected to the same side as the optical path of the laser beam E and is substantially collimated to enter the concave surface mirror 18 of the optical means to be described later.

The optical head 15 is movably disposed in a main scanning direction X (a first scanning direction) on an optical head holding substrate (holding section) 40 which can be moved in a sub-scanning direction Y (a second scanning direction) by a movement mechanism (not shown). The entire surface of the image carrier 21 is scanned with the laser beam E by moving the optical head 15. In other words, the optical head 15 moves in the main scanning direction X on the optical head holding substrate 40 and is caused to be moved in a X-Y direction by the movement of the optical head holding substrate 40 in the sub-scanning direction Y so that the entire surface of the image carrier 21 is scanned with the laser beam E.

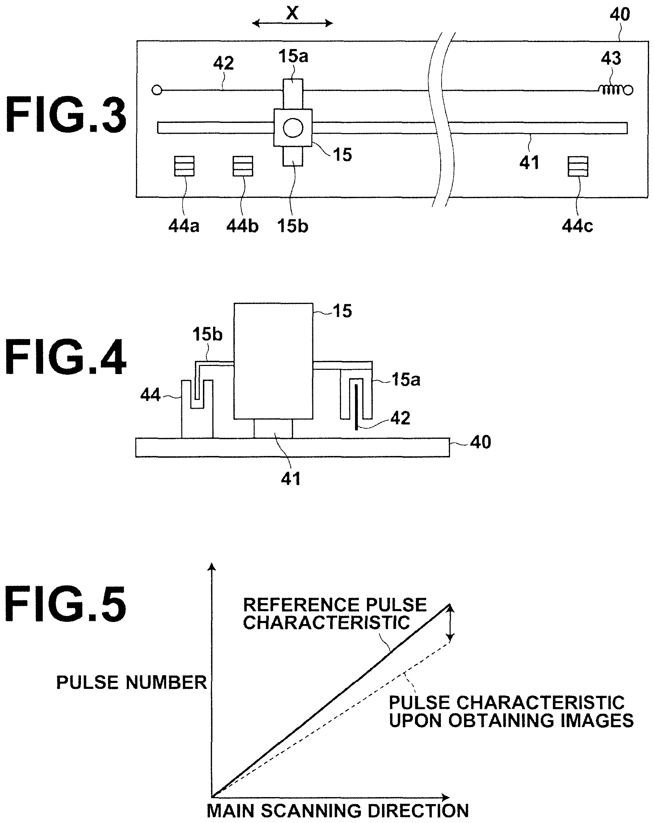

Here, the configuration of the optical head holding substrate 40 will be described in detail. Figure 3 is a top plan view showing the schematic configuration of an optical head holding substrate of the image readout apparatus as described above. Figure 4 is a side view showing the schematic configuration of the optical head holding substrate of the image readout apparatus as described above.

As illustrated in Figure 3, the optical head 15 is movably held in the main scanning direction X by a rail 41 of on the optical head holding substrate 40. A linear scale film 42 is attached onto the optical head holding substrate 40 parallel to the rail 41.

In this linear scale film 42, a scanning-start-side edge of the optical head 15 is directly held by the optical head holding substrate 40 and a scanning-end-side edge is held by the optical head holding substrate 40 via a spring 43. The linear scale film 42 is constantly pulled to be in a state without slack by a biasing force of the spring 43.

As illustrated in Figure 4, an encoder module 15a which reads out the linear scale film 42 is mounted on a side surface on the side of a linear scale film 42 of the optical head 15. The encoder module 15a and the linear scale film 42 act as a linear encoder.

Further, a position detection piece 15b is provided on the side surface opposite to the side surface on the side of a linear scale film 42 of the optical head 15. Further, three position detection sensors 44a, 44b, 44c which detect the existence of the position detection piece 15b are provided on the opposite side of the linear scale film 42 across the rail 41 on the optical head holding substrate 40. The position detection sensor 44a is disposed at the scanning-start-side edge of the optical head 15, the position detection sensor 44b is disposed at the scanning origin position (scanning start position) of the optical head 15, and the position detection sensor 44c is disposed at the scanning-end-side edge (scanning end position) of the optical head 15, which makes it possible to detect that the optical head 15 is at an appropriate position. It should be noted that the position detection piece 15b and the position detection sensors 44a, 44b, and 44c constitute a position detection means.

The optical means 60 includes a mirror 12, a perforated mirror 14 comprised of a concave surface mirror, having a hole 13 in the central portion, for branching light that enters thereinto into the excitation light E and the emitted light L, a concave surface mirror 18, and a filter unit 28 for selectively allowing light to enter a photomultiplier 30.

The laser beam E reflected at the mirror 9 of the light source optical system 50 and entered into the mirror 12 is reflected by the mirror 12, passes through the hole 13 of the perforated mirror 14, enters the concave surface mirror 18, and is reflected by the concave surface mirror 18 to enter the optical head 15.

The emitted light L, which has been emitted from the image carrier 21, has been reflected by the concave surface mirror 16 of the optical head 15, and has entered the concave surface mirror 18, is reflected by the concave surface mirror 18 and enters the perforated mirror 14.

The emitted light L, which has entered the perforated mirror 14, is reflected downward by the perforated mirror 14, enters the filter unit 28, has a predetermined wavelength thereof cut off, and enters the photomultiplier 30 to be photoelectrically detected.

The filter unit 28 includes four filter members 31a, 31b, 31c, and 31d. The filter unit 28 is movably constructed in directions of an arrow Z by a filter unit motor (not shown).

The filter member 31a excites a fluorescent dye contained in the image carrier 21 by using the first laser excitation light source 1 and is used when reading out fluorescent light in the case that the image carrier 21 is a gel support or a transfer support. The filter member 31a includes a filter which cuts off light having a wavelength of 640nm and transmits light having wavelengths longer than 640nm.

The filter member 31b excites a fluorescent dye contained in the image carrier 21 by using the second laser excitation light source 2 and is used when reading out fluorescent light in the case that the image carrier 21 is a gel support or a transfer support. The filter member 31b includes a filter which cuts off light having a wavelength of 532nm and transmits light having wavelengths longer than 532nm.

The filter member 31c excites a fluorescent dye contained in the image carrier 21 by using the third laser excitation light source 3 and is used when reading out fluorescent light in the case that the image carrier 21 is a gel support or a transfer support. The filter member 31c includes a filter which cuts off light having a wavelength of 473nm and transmits light having wavelengths longer than 473nm.

The filter member 31d excites a photostimulable phosphor contained in a storage phosphor sheet by using the first laser excitation light source 1 and is used when reading out the photostimulated light emitted from the photostimulable phosphor in the case that the image carrier 21 is a storage phosphor sheet. The filter member 31d includes a filter which transmits only light within the wavelength band of the photostimulated light emitted from the photostimulable phosphor and cuts off light having a wavelength of 640nm.

Accordingly, the photomultiplier 30 can photoelectrically detect only the light to be detected by selecting a laser excitation light source according to type of the image carrier 21, the fluorescent dye and the like and by selectively disposing the filter members 31a, 31b, 31c and 31d in response thereto in the front of the photomultiplier 30.

The name of a readout mode may be set and stored for each combination of the laser excitation light source and the filter so that the types of the laser excitation light source and the filter can be primarily determined by reference to the name of a readout mode by a user.

Analog image data S_{A}, which has been photoelectrically detected and generated by the photomultiplier 30, is converted into digital image data S_{D} by an A/D converter 33 and then is transferred to the memory 34. The digital image data S_{D} within the memory 34 is subjected to image processing such as correction of pixel positions and the like by the image processing section 35 as necessary, and then is transferred to the computer 120 by the USB transfer section 36.

All of the constituent elements as described above are integrally controlled by control means (not shown).

Next, the operation of the image readout apparatus 110 during image readout will be described. Figure 5 is a chart showing the relationship between positions in a main scanning direction of the optical head and the numbers of linear encoder pulses.

The linear scale film of approximately 50cm under the circumstances of ordinary use expands and contracts by a maximum of approximately 200µm. At this time, the maximum error is approximately 0.04%, which is not preferable but is an acceptable value in the case that a single image is viewed. However, this has a significant influence on the accuracy of analysis in the case that positions and sizes of objects to be measured are minutely compared among a plurality of images, for example, in the case that the amounts of electrophoresis are measured among a plurality of images when analyzing protein or DNA.

Accordingly, the image readout apparatus 110 of the present embodiments performs the following correcting operations at the image processing section 35 when reading out a related plurality of images.

In the case that a user inputs an instruction to read out the related plurality of images, the first image of the related plurality of images to be read out is designated as a reference image. During the readout of this reference image, the optical head 15 is first moved to the scanning origin position, and then is further moved therefrom to the scanning-end-side edge. At this time, the number of encoder pulses is obtained as a comparative pulse number. Then, the optical head 15 is two-dimensionally moved in a main scanning direction X and a sub-scanning direction Y, and the entire surface of the image carrier 21 is scanned to obtain image data.

Next, for the remaining images other than the reference image among the plurality of images, a comparative pulse number and image data are obtained in the same manner as the reference image.

The comparative pulse number obtained during the readout of the reference image is designated as a reference pulse number for the remaining images other than the reference image among the plurality of images. Each of the remaining images is subjected to correction of the pixel positions in a direction corresponding to the main scanning direction X of each image based on the difference between the reference pulse number and the comparative pulse number of each image.

The correction of the pixel positions will be described in detail. As illustrated in Figure 5, as the main scanning direction position of the optical head is moved from the original point toward the scanning-end-side edge, the number of linear encoder pulses linearly is increased. In the case that the linear scale film does not expand nor contract, no differences in pulse characteristics arises between during the readout of the reference image and during the readout of the other images. However, in the case that the linear scale film extends, the pulse number when the optical head is moved to the scanning-end-side edge is decreased and in the case that the linear scale film contracts, the pulse number when the optical head is moved to the scanning-end-side edge is increased.

Consequently, in the case that the pulse number at the scanning-end-side edge is decreased, the size of an image in a direction corresponding to the main scanning direction X is smaller than that of the reference image. Accordingly, correction of the pixel positions may be performed to enlarge the image only by a ratio of the difference between the reference pulse number and the comparative pulse number of each image in a direction corresponding to the main scanning direction X of an image.

Next, in the case that the pulse number at the scanning-end-side edge is increased, the size of an image in a direction corresponding to the main scanning direction X is larger than that of the reference image. Accordingly, correction of the pixel positions may be performed to diminish the image only by a ratio of the difference between the reference pulse number and the comparative pulse number of each image in a direction corresponding to the main scanning direction X of an image.

With this correction, image data equivalent to those obtained under the same condition for the linear encoder can be obtained from among all of the related plurality of images. This can improve the accuracy of analysis when minutely comparing positions and sizes of objects to be measured among a plurality of images.

The reference pulse number is not limited to the embodiment in which any one of the related plurality of images to be read out is designated as a reference image and the comparative pulse number obtained during the readout of the reference image is designated as a reference pulse number, but may be a pulse number which is stored in advance in an apparatus as a reference. In this case, image data equivalent to those obtained under the same condition for the linear encoder can be obtained from not only among the related images but also among all images.

Moreover, when reading out a single image, comparative pulse numbers may be obtained at a plurality of points (for example, for each line or for every several lines) in the sub-scanning direction, a region (a region between each comparative pulse number obtaining line and the next comparative pulse number obtaining line) corresponding to each of a plurality of comparative pulse numbers may be subjected to correction of pixel positions based on the difference between the reference pulse number and each comparative pulse number. When reading out images at high resolution from the image carrier 21, it takes several tens of minutes to read out the images according to the sizes of the images. During this time, the linear scale film is likely to expand and contract, but images having less distortion can be obtained in this aspect.

As in the embodiment described above, in the case that the pixel positions are corrected among the plurality of images, obtaining comparative pulse numbers at the plurality of points in the sub-scanning direction Y during each image readout operation and correcting the pixel positions for a region corresponding to each of the plurality of comparative pulse numbers based on the difference between the reference pulse number and each comparative pulse number can enable the improvement of the accuracy of analysis when precisely comparing positions and sizes of objects to be measured among the plurality of images.

As described above, the image readout apparatus is capable of reading out images, for example, fluorescence images, chemiluminescence images, radiological images and the like, but can be individually constructed as an image readout apparatus which is capable of reading out only the fluorescence images, an image readout apparatus which is capable of reading out only the chemiluminescence images and the like.

In addition to those described above, various kinds of modifications and changes may be made within a range that does not depart from the present invention.

## Claims

1. An image readout method for scanning a light acquisition section (15) which is movable in a main scanning direction (X) and a sub-scanning direction (Y) perpendicular to the main scanning direction (X) and which outputs excitation light onto an image carrier (21) and photoelectrically reads out light received from said image carrier (21) carrying image information so as to obtain image data of an image represented by the image information, wherein the image data is structured such that positions of the light acquisition section (15) in the main and sub-scanning direction are associated with pixel positions of the information carried by the image carrier; the method comprising the steps of:
obtaining the number of encoder pulses of an encoder module which reads out a linear scale film (42) of the light acquisition section (15) and positioned along the main scanning direction (X) as a comparative pulse number when the light acquisition section (15) is moved from the scanning start position (44b) to the scanning end position (44c) in the main scanning direction (X) during image readout; and
correcting pixel positions in a direction corresponding to the main scanning direction (X) of the image information carried by the image carrier based on the difference between a reference pulse number which is determined in advance and the comparative pulse number.

2. The image readout method of claim 1, wherein the pixel positions are corrected in such a manner that any one of a related plurality of images to be read out is designated as a reference image, and for images other than the reference image among the plurality of images, the comparative pulse number obtained during readout of the reference image is designated as the reference pulse number.

3. The image readout method of claim 1 or 2, the method further comprising the steps of:
obtaining the comparative pulse number at a plurality of points in the sub-scanning direction (Y) when reading out a single image; and
correcting the pixel positions in a region between each comparative pulse number obtaining line and the next comparative pulse number obtaining line corresponding to each of a plurality of comparative pulse numbers based on the difference between the reference pulse number and each comparative pulse number.

4. An image readout apparatus that scans a light acquisition section (15), which is movable in a main scanning direction (X) and a sub-scanning direction (Y) perpendicular to the main scanning direction (X) and which is adapted to output excitation light onto an image carrier (21) and to photoelectrically read out light received from said image carrier (21) carrying image information so as to obtain image data of an image represented by the image information, wherein the image data is structured such that positions of the light acquisition section (15) in the main and sub-scanning direction are associated with pixel positions of the image information carried by the image carrier, the apparatus comprising:
a holding section (40) adapted to movably hold the light acquisition section (15) in the main scanning direction (X);
position detection means (15b, 44a, 44b and 44c) adapted to detect a scanning start position and a scanning end position of the light acquisition section (15) at the holding section(40);
a linear encoder (42) adapted to detect positions of the light acquisition section (15) between the scanning start position and the scanning end position, the linear encoder having a linear scale film (42);
an encoder module (15a) adapted to read out the linear scale film (42) of the linear encoder (15a, 42) along the main scanning direction;
control means which controls a movement of the light acquisition section (15) and an operation of the linear encoder such that the number of encoder pulses of the linear encoder (15a, 42) is obtained as a comparative pulse number when the light acquisition section (15) is moved from the scanning start position to the scanning end position during image readout; and
correction means (35) which corrects pixel positions of the image in a direction corresponding to the main scanning direction (X) based on the difference between a reference pulse number which is determined in advance and the comparative pulse number.

## Patentansprüche

1. Bildausleseverfahren zum abtastenden Führen eines Lichterfassungsabschnitts (15), der in einer Hauptabtastrichtung (X) und einer rechtwinklig zu der Hauptabtastrichtung (X) verlaufenden Nebenabtastrichtung (Y) bewegbar ist, und der Anregungslicht auf einen Bildträger (21) ausgibt und von dem Bildinformation tragenden Bildträger (21) empfangenes Licht photoelektrisch liest, um Bilddaten eines durch die Bildinformation repräsentierten Bilds zu gewinnen, wobei die Bilddaten derart strukturiert sind, dass die Stellen des Lichterfassungsabschnitts (15) in der Haupt- und der Nebenabtastrichtung Pixelstellen der von dem Bildträger getragenen Information zugeordnet sind, umfassend folgende Schritte:
Ermitteln der Anzahl von Kodiererimpulsen eines Kodierermoduls, welches eine lineare Skalenschicht (42) des Lichterfassungsabschnitts (15) liest und entlang der Hauptabtastrichtung gelegen ist, als eine Vergleichsimpulszahl, wenn der Lichterfassungsabschnitt (15) von der Abtast-Startposition (44b) zu der Abtast-Endposition (44c) während des Bildauslesens in der Hauptabtastrichtung (X) bewegt wird; und
Korrigieren von Pixelstellen in einer Richtung entsprechend der Hauptabtastrichtung (X) der von dem Bildträger getragenen Bildinformation, basierend auf der Differenz zwischen einer Referenzimpulszahl, die vorab bestimmt wurde, und der Vergleichsimpulszahl.

2. Bildausleseverfahren nach Anspruch 1, bei dem Pixelpositionen derart korrigiert werden, dass eines von einer Mehrzahl auszulesender Bilder als ein Referenzbild bestimmt wird, und für von dem Referenzbild verschiedene Bilder unter den mehreren Bildern die Vergleichsimpulszahl, die während des Auslesens des Referenzbilds gewonnen wird, als die Referenzimpulszahl bestimmt wird.

3. Bildausleseverfahren nach Anspruch 1 oder 2, weiterhin umfassend die Schritte:
Ermitteln der Vergleichsimpulszahl an mehreren Punkten in der Nebenabtastrichtung (Y) beim Auslesen eines einzelnen Bilds; und
Korrigieren der Pixelstellen in einer Zone zwischen jeder Vergleichsimpulszahl-Gewinnungszeile und der nächsten Vergleichsimpulszahl-Gewinnungszeile entsprechend jeder von mehreren Vergleichsimpulszahlen, basierend auf der Differenz zwischen der Referenzimpulszahl und jeder Vergleichsimpulszahl.

4. Bildauslesevorrichtung, die einen Lichterfassungsabschnitt (15) abtastend führt, der in einer Hauptabtastrichtung (X) und einer zu der Hauptabtastrichtung (X) rechtwinkligen Nebenabtastrichtung (Y) bewegbar ist und dazu ausgebildet ist, Anregungslicht auf einen Bildträger (21) auszugeben und von dem Bildinformation tragenden Bildträger (21) empfangenes Licht photoelektrisch auszulesen, um Bilddaten eines durch die Bildinformation repräsentierten Bilds zu gewinnen, wobei die Bilddaten so strukturiert sind, dass Stellen des Lichterfassungsabschnitts (15) in der Haupt- und der Nebenabtastrichtung Pixelstellen der von dem Bildträger getragenen Bildinformation zugeordnet sind, umfassend:
einen Halteabschnitt (4), ausgebildet zum beweglichen Halten des Lichterfassungsabschnitts (15) in der Hauptabtastrichtung (X);
eine Positionsdetektoreinrichtung (15b, 44a, 44b und 44c), ausgebildet zum Nachweisen einer Abtast-Startposition und einer Abtast-Endposition des Lichterfassungsabschnitts (15) an dem Halteabschnitt (40);
einen Linear-Kodierer (42), ausgebildet zum Erfassen von Stellen des Lichterfassungsabschnitts (15) zwischen der Abtast-Startposition und der Abtast-Endposition, wobei der Linear-Kodierer eine lineare Skalenschicht (42) aufweist;
ein Kodierermodul (15a), ausgebildet zum Auslesen der linearen Skalenschicht (42) des Linear-Kodierers (15a, 42) entlang der Hauptabtastrichtung;
eine Steuereinrichtung, die eine Bewegung des Lichterfassungsabschnitts (15) und einen Betrieb des Linear-Kodierers derart steuert, dass die Zahl der Kodiererimpulse des Linear-Kodierers (15a, 42) gewonnen wird als eine Vergleichsimpulszahl, wenn der Lichterfassungsabschnitt (15) von der Abtast-Startposition zu der Abtast-Endposition während des Bildauslesens bewegt wird; und
eine Korrektureinrichtung (35), welche Pixelpositionen des Bilds in einer Richtung entsprechend der Hauptabtastrichtung (X) basierend auf der Differenz zwischen einer vorab bestimmten Referenzimpulszahl und der Vergleichsimpulszahl korrigiert.

## Revendications

1. Procédé de lecture d'image destiné à balayer une section d'acquisition de lumière (15), laquelle peut être déplacée dans une direction de balayage principale (X) et une direction de sous-balayage (Y) perpendiculaire à la direction de balayage principale (X) et laquelle produit une lumière d'excitation sur un support d'image (21) et lit par voie photoélectrique une lumière reçue dudit support d'image (21) portant des informations d'image, de manière à obtenir des données d'image d'une image représentée par les informations d'image, dans lequel les données d'image sont structurées de telle sorte que des positions de la section d'acquisition de lumière (15) dans les directions principale et de sous-balayage sont associées à des positions de pixel des informations portées par le support d'image, le procédé comprenant les étapes consistant à :
obtenir le nombre d'impulsions de codeur d'un module codeur qui lit un film à échelle linéaire (42) de la section d'acquisition de lumière (15) et est positionné le long de la direction de balayage principale (X) comme numéro d'impulsion de comparaison lorsque la section d'acquisition de lumière (15) est déplacée de la position de début de balayage (44b) à la position de fin de balayage (44c) dans la direction de balayage principale (X) durant la lecture d'image, et
corriger les positions de pixel dans une direction correspondant à la direction de balayage principale (X) des informations d'image portées par le support d'image, sur la base de la différence entre un numéro d'impulsion de référence déterminé à l'avance et le numéro d'impulsion de comparaison.

2. Procédé de lecture d'image selon la revendication 1, dans lequel les positions de pixel sont corrigées de telle sorte que l'une quelconque d'une pluralité connexe d'images à lire est désignée comme image de référence, et pour des images autres que l'image de référence parmi la pluralité d'images, le numéro d'impulsion de comparaison obtenu durant la lecture de l'image de référence est désigné comme le numéro d'impulsion de référence.

3. Procédé de lecture d'image selon la revendication 1 ou 2, comprenant en outre les étapes consistant à :
obtenir le numéro d'impulsion de comparaison en une pluralité de points dans la direction de sous-balayage (Y) lors de la lecture d'une image unique, et
corriger les positions de pixel dans une région entre chaque ligne d'obtention de numéro d'impulsion de comparaison et la ligne d'obtention de numéro d'impulsion de comparaison suivante correspondant à chacun d'une pluralité de numéros d'impulsion de - comparaison sur la base de la différence entre le numéro d'impulsion de référence et chaque numéro d'impulsion de comparaison.

4. Appareil de lecture d'image qui balaie une section d'acquisition de lumière (15), laquelle peut être déplacée dans une direction de balayage principale (X) et une direction de sous-balayage (Y) perpendiculaire à la direction de balayage principale (X) et est apte à produire une lumière d'excitation sur un support d'image (21) et à lire par voie photoélectrique une lumière reçue dudit support d'image (21) portant des informations d'image, de manière à obtenir des données d'image d'une image représentée par les informations d'image, dans lequel les données d'image sont structurées de telle sorte que des positions de la section d'acquisition de lumière (15) dans les directions principale et de sous-balayage sont associées à des positions de pixel des informations d'image portées par le support d'image, l'appareil comprenant :
une section de maintien (40) apte à maintenir d'une manière pouvant être déplacée la section d'acquisition de lumière (15) dans la direction de balayage principale (X) ;
un moyen de détection de position (15b, 44a, 44b et 44c) apte à détecter une position de début de balayage et une position de fin de balayage de la section d'acquisition de lumière (15) au niveau de la section de maintien (40) ;
un codeur linéaire (42) apte à détecter des positions de la section d'acquisition de lumière (15) entre la position de début de balayage et la position de fin de balayage, le codeur linéaire présentant un film à échelle linéaire (42) ;
un module codeur (15a) apte à lire le film à échelle linéaire (42) du codeur linéaire (15a, 42) le long de la direction de balayage principale ;
un moyen de commande, lequel commande un déplacement de la section d'acquisition de lumière (15) et un fonctionnement du codeur linéaire de telle sorte que le numéro d'impulsion de codeur du codeur linéaire (15a, 42) soit obtenu comme numéro d'impulsion de comparaison lorsque la section d'acquisition de lumière (15) est déplacée de la position de début de balayage à la position de fin de balayage durant la lecture d'image, et
un moyen de correction (35), lequel corrige des positions de pixel de l'image dans une direction correspondant à la direction de balayage principale (X), sur la base de la différence entre un numéro d'impulsion de référence déterminé à l'avance et le numéro d'impulsion de comparaison.
